# EUROPÄISCHE PATENTANMELDUNG

(11) **EP 0 867 664 A2**
(43) Veröffentlichungstag der Anmeldung: **30.09.1998**
(21) Anmeldenummer: 98105251.7
(22) Anmeldetag: 23.03.1998
(51) Int. Cl.: F24D 3/16

(54) **Raumtemperierungssystem**

(30) Priorität: 26.03.1997 DE 19712744
(71) Anmelder: RHT Heizung- und Sanitärtechnik GmbH, 98634 Kaltensundheim/Thür. (DE)
(72) Erfinder: Hess,Roland, 98634 Kaltensundheim (DE); Schmuck, Hartmut, 98634 Melpers (DE)
(74) Vertreter: Engel, Christoph Klaus

(57) **Zusammenfassung**

Die Erfindung betrifft ein Raumtemperierungssystem, bei dem Wände oder Wandbereiche des Raums als Temperierungselemente ausgebildet sind, die Wärmestrahlung emittieren oder absorbieren, wobei die Temperierungselemente als Vorsatzschale (1) vor der eigentlichen Bauwerkswand (2) aufgebaut und an dieser befestigt sind, unter Ausbildung eines zum Raum hin dichten Temperierungshohlraums zwischen Vorsatzschale und Bauwerkswand, der seinerseits durch eine im wesentlichen parallel zur Bauwerkswand verlaufende Trennwand (3) in einen raumseitigen Strömungskanal (5) und einen bauwerkswandseitigen Strömungskanal (6), die beide nur über obere und untere Umkehrräume (7, 8) miteinander strömungstechnisch verbunden sind, unterteilt ist und in welchem ein ein Wärmetransportmedium führender Wärmetauscher (10) angeordnet ist, wobei innerhalb des raumseitigen Strömungskanals (5) mehrere vertikal verlaufende raumseitige Trennstege angeordnet sind.

## Beschreibung

Die Erfindung betrifft ein Raumtemperierungssystem gemäß dem Oberbegriff des Anspruchs 1.

Für die Temperierung von Räumen, beispielsweise Wohn- oder Geschäftsräumen, sind verschiedene Systeme bekannt. Zumeist werden die Räume nur mit einem Heizsystem ausgestattet, so daß die Raumtemperatur auf Wunsch gegenüber der Außentemperatur angehoben werden kann. Insbesondere bei Büro- und Geschäftsräumen geht man aber auch dazu über, eine umfassende Klimatisierung vorzunehmen, wobei bei hohen Außentemperaturen auch eine Absenkung der Raumtemperatur möglich ist.

In der Deutschen Offenlegungsschrift DE 195 14 296 A 1 ist ein Heizkörper beschrieben, der an einer Wand montiert und an einen Warmwasserheizkreislauf angeschlossen ist. Dieser Heizkörper besitzt besonders ausgestaltete Luftleitbleche, die ein gutes Konvektionsverhalten des Heizkörpers bezwecken. Es hat sich jedoch gezeigt, daß die bei der Verwendung von Heizkörpern zwingend erforderliche Konvektion in dem zu beheizenden Raum eine ständige Luftströmung hervorruft, die das Wohlbefinden von Personen, die sich in dem Raum aufhalten, deutlich stören können. Durch die Luftströmungen innerhalb des Raumes kommt es auch verstärkt zur Aufwirbelung von Staub und kleinen Schmutzpartikeln, die im ungünstigen Fall allergische Reaktionen hervorrufen können. Das Wohlbefinden ist auch entscheidend von dem Verlauf des Temperaturgradienten im Raum abhängig. Bei der Verwendung von Heizkörpern kommt es auf Grund des Strömungsverhaltens dazu, daß die Luft in den oberen Bereichen des Raums stärker erwärmt ist als in den unteren Bereichen. Außerdem muß die Temperatur der Raumluft höher sein, als die an den Wänden, insbesondere den Außenwänden, sich einstellende Oberflächentemperatur, damit ein gewisses Wohlbefinden verzeichnet werden kann. Das relativ starke Temperaturgefälle zwischen Raumluft und Oberfläche der Wände wird häufig als unangenehm empfunden, insbesondere wenn man sich in der Nähe der Außenwände aufhält.

Die Deutsche Gebrauchsmusterschrift DE G 94 06 473.3 schlägt ein Heizsystem vor, bei welchem an den Raumwänden Tonhohlplatten angeordnet sind, in deren Hohlräumen warme Luft zirkuliert, wobei die Erwärmung der Luft durch von einem Wärmeträgermedium durchflossene Heizrohre erfolgt, die ebenfalls innerhalb der Tonhohlplatten verlaufen. Sofern keine durch ein Gebläse erzwungene Zirkulationsrichtung vorgegeben ist, kann eine stabile Zirkulation der erwärmten Luft nur erreicht werden, wenn Kanäle vorgesehen sind, die das Aufströmen der warmen Luft einerseits und das Abströmen der abgekühlten Luft andererseits ermöglichen. Eine besondere Ausgestaltung des in dieser Gebrauchsmusterschrift gezeigten Heizsystems stellt daher vertikal verlaufende Strömungskanäle in den Tonhohlplatten zur Verfügung, wobei einzelne Abschnitte der Heizrohre horizontal durch diese Strömungskanäle verlaufen. Bei der gezeigten Anordnung liegen die Strömungskanäle zwangsläufig in einer Ebene, so daß unmittelbar neben den die aufströmende erwärmte Luft führenden Kanälen solche Kanäle vorgesehen sind, in denen die abgekühlte Luft nach unten strömen kann. Beim großflächigen Einsatz eines derartigen Heizsystems an einer Raumwand ergeben sich somit zwangsläufig Bereiche, die erwärmt werden und eine Wärmestrahlung in den Raum abgeben können, aber auch Bereiche, die eine deutlich niedrigere Oberflächentemperatur aufweisen und als Wärmestrahlungssenke wirken. Der Aufbau eines solchen Systems ist außerdem relativ aufwendig und teuer, da die verwendeten Tonhohlplatten exakt positioniert werden müssen.

In der Europäischen Patentschrift EP 0 223 241 ist ein verbessertes Heizungssystem gezeigt, welches die Wärmestrahlung aufgeheizter Wandoberflächen zum Einsatz bringt. Bei dieser Raumheizung ist vor der eigentlichen Bauwerkswand eine Vorsatzschalenwand angeordnet, wobei in dem zwischen der Bauwerkswand und der Vorsatzschale ausgebildeten Hohlraum eine weitere Trennwand angeordnet ist, die den Hohlraum in einen raumseitigen Luftauftriebskanal und einen bauwerkswandseitigen Luftabtriebskanal unterteilt.

Eine derartige Raumheizung bietet eine Reihe von Vorteilen, die auf der Verwendung von Vorsatzschalen als eine die Wärmestrahlung abgebende Fläche beruhen. Dadurch daß der betreffende Raum ausschließlich oder vorwiegend durch die ausgesandte Wärmestrahlung beheizt wird, verbessert sich das Raumklima deutlich. Innerhalb des Raumes besteht nur ein sehr geringer Temperaturgradient und störende Luftströmungen werden sicher vermieden. Die mit einer solchen Raumheizung ausgestatteten Wände stellen keine Wärmestrahlungssenke dar, so daß auch in unmittelbarer Nähe dieser Wände eine behagliche Temperatur herrscht. Untersuchungen haben ergeben, daß die Raumtemperatur in derartig beheizten Räumen um ca. 2°C tiefer liegen kann als in mit Konvektionsheizkörpern bestückten Räumen, ohne daß die sich im Raum aufhaltenden Personen eine Erhöhung der Raumtemperatur wünschen. Das subjektive Temperaturempfinden läßt den Eindruck entstehen, daß die Raumtemperatur insgesamt höher eingestellt ist. Bereits aufgrund dieses Effekts kommt es zu einer deutlichen Einsparung von Heizkosten, da weniger Heizenergie aufgewendet werden muß, um ein behagliches Raumklima zu erzeugen.

Ein weitere Vorteil einer derartigen Raumheizung besteht darin, daß die im Hohlraum zirkulierende Luft relativ trocken ist und eine Kondensation an der Bauwerkswand vermieden wird, da die zum Raum hin gerichtete Vorsatzschale keine kalte Kondensationsfläche darstellt. Bei längerem Betrieb einer derartigen Heizung kommt es zu einer gewünschten Austrocknung der Bauwerkswand, wodurch auch die Wärmeleitfähigkeit (k-Wert) der Bauwerkswand herabgesetzt und damit die Wärmeverluste nochmals verringert werden. Derartige Raumheizungen eignen sich daher sowohl für den Einsatz in Neubauten, als auch zum nachträglichen Einbau beispielsweise in alten Fachwerkhäusern, bei denen die Trockenhaltung der Bauwerkswände von substanzerhaltender Bedeutung ist.

Die genannten Vorteile einer Raumheizung, die durch Wärmestrahlung der Wände die Beheizung der Räume sicherstellt, prädestinieren derartige Systeme auch für den Einsatz in klimasensiblen Räumen, wie z.B. in Museen. Durch den verringerten Staubtransport wird die Verschmutzung der Ausstellungsstücke spürbar herabgesetzt. Die Vermeidung kalter Oberflächen an den Außenwänden ermöglicht die Stabilisierung der Luftfeuchtigkeit und verhindert Kondensation an den Wänden. Gleichzeitig wird die Bausubstanz selbst vor Durchfeuchtung und Schimmelpilzbildung geschützt. Bei der Verwendung großer beheizter Wandflächen kann die Temperatur selbst niedrig gehalten werden, was einerseits zur Einsparung von Heizkosten und andererseits zu günstigem Temperaturverhalten im Raum führt, wodurch wertvolle Exponate kaum durch Temperaturschwankungen belastet werden.

Die Raumheizung nach dem Stand der Technik, die in der EP 0 223 241 beschrieben ist, weist aber auch Nachteile auf, die sich aus ihrem Aufbau ergeben. Bei den vorgeschlagenen Ausgestaltungen kann es relativ schnell zu einem unvorhergesehenen Strömungsverlauf der erwärmten Luftmassen innerhalb des Hohlraums zwischen der Vorsatzschale und der Bauwerkswand kommen. Je höher und breiter die zu beheizende Fläche ist, desto eher reißt der Luftauftriebsstrom oder auch der Luftstrom im Luftabtriebskanal ab, so daß beispielsweise innerhalb des Luftauftriebskanals der Luftstrom umkippt und in der gleichen Ebene die abgekühlte Luft nach unten sackt. Damit wird die Vorsatzschale aber ungleichmäßig erwärmt, so daß Bereiche hoher Oberflächentemperatur und Bereiche mit geringer Oberflächentemperatur entstehen. Diese ungünstigen Strömungseffekte werden noch durch die vorgeschlagenen Gestaltungen verstärkt, bei denen aus Stabilitätsgründen in den Hohlraum beispielsweise gewellte Trennwände eingebracht werden. Um einerseits eine ausreichende Beheizung des Raumes zu gewährleisten und andererseits eine erforderliche Luftströmung in den Kanälen aufrechtzuerhalten, muß das durch den Wärmetauscher fließende Wärmetransportmedium mit einer relativ hohen Temperatur beaufschlagt werden. Bei üblichen Raumhöhen von ca. 2,5 bis 3 Meter sind daher im Heizsystem Vorlauftemperaturen von ca. 70°C erforderlich. Einzelne Bereiche der erwärmten Vorsatzschale weisen dann eine derart hohe Temperatur auf, daß zum Beispiel an der Wand befestigte hochwertige Gemälde eine Schädigung erfahren können. Zwangsläufig steigt auch die Temperatur im Luftabtriebskanal, so daß die durch Wärmeabgabe durch die Bauwerkswand entstehenden Wärmeverluste relativ hoch sind. Die Luftströmungen in den Luftauftriebs- und Luftabtriebskanälen sind letztlich nicht vorhersehbar, wodurch erst nach Fertigstellung der kompletten Raumheizung die Wandbereiche höherer und niedriger Oberflächentemperatur ermittelt werden können. Das Strömungsverhalten ist zumeist so undefiniert, daß nach einem Abschalten der Heizung und erneuter Inbetriebnahme eine veränderte Wärmeströmung im Hohlraum zwischen Vorsatzschale und Bauwerkswand entsteht, wodurch das Raumklima deutlich verändert werden kann.

In der schweizerischen Patentschrift CH 254 181 ist eine Raumheizung beschrieben, durch welche eine Raumwand unmittelbar als Temperierungselement ausgebildet ist. Die Heizung ist als Vorsatzschale vor der eigentlichen Raumwand aufgebaut und besitzt einen raumseitigen und einen wandseitigen Strömungskanal. Beide Kanäle sind über obere und untere Umlenkräume strömungstechnisch miteinander verbunden. Als Querverstrebungen in diesen Kanälen sind Stege angeordnet, die vertikal in diesen Kanälen verlaufen. Obwohl durch diese Stege Teilkanäle ausgebildet werden, die eine Führung der Luftströmung begünstigen können, kommt es bei dieser Raumheizung zu Unregelmäßigkeiten im Strömungsverhalten, so daß eine gleichmäßige Erwärmung der gesamten Wandfläche nicht erreicht werden kann.

Die Aufgabe der vorliegenden Erfindung besteht somit darin, die vorgenannten Nachteile zu vermeiden und ein Raumtemperierungssystem zur Verfügung zu stellen, welches eine gleichmäßige Erwärmung der gesamten beheizten Vorsatzschalenfläche sicherstellt und damit ein konstantes Raumklima gewährleistet.

Diese Aufgabe mit einem Raumtemperierungssystem gelöst, welches weiterhin die im kennzeichnenden Teil des Anspruchs 1 angegebenen Merkmale aufweist.

Ein derartiges Raumtemperierungssystem bietet den Vorteil, daß Unregelmäßigkeiten im Strömungsverlauf ausgeschlossen werden, wodurch eine gleichmäßige Erwärmung über die gesamte Fläche der Vorsatzschale gewährleistet ist. Die einzelnen Teilkanäle sind so dimensioniert, daß es nicht innerhalb der Teilkanäle zu undefinierten Verwirbelungen der durchströmenden Luft kommen kann. Dadurch, daß die Teilkanäle sich über die gesamte Höhe des raumseitigen Strömungskanals erstrecken und außerdem in den Umkehrräumen und zumindest in Abschnitten des bauwerkswandseitigen Strömungskanals fortgesetzt sind, kann auch keine Strömungssituation entstehen, bei der aus benachbarten Teilkanälen Luft angesaugt wird, wodurch es zur Abkühlung der zum entsprechenden Teilkanal gehörenden Oberfläche der Vorsatzschale kommen würde.

Da auf diese Weise sichergestellt ist, daß die gesamte projektierte Fläche der Vorsatzschale als Strahlungsquelle für die Wärmestrahlung zur Verfügung steht, kann die für eine gewünschte Erwärmung des Raumes erforderliche Vorlauftemperatur des Wärmetransportmediums, welches durch den Wärmetauscher fließt, deutlich herabgesetzt werden. Es hat sich gezeigt, daß Vorlauftemperaturen von etwa 45°C in den meisten Fällen ausreichend sind. Die gesamte Vorsatzschale weist daher im Betriebsfall eine nur geringfügig über der gewünschten Raumtemperatur liegende Oberflächentemperatur auf. Es ist auch sichergestellt, daß nicht durch fehlerhaftes Strömungsverhalten die erwärmte Luft in den bauwerkswandseitigen Strömungskanal einströmen kann. Daher und aufgrund der verringerten Betriebstemperatur ist auch die durchschnittliche Temperatur der im bauwerkswandseitigen Strömungskanal bewegten Luft deutlich verringert, wodurch die Wärmeverluste ebenfalls herabgesetzt sind.

Messungen haben gezeigt, daß die durchschnittliche Temperatur im bauwerkswandseitigen Strömungskanal etwa 3° bis 4°Celcius unter der durchschnittlichen Temperatur im raumseitigen Strömungskanal liegt. Die sich an der Innenseite der Bauwerkswand einstellende Oberflächentemperatur ist damit in der Regel wesentlich geringer, als die Oberflächentemperatur bei der Verwendung herkömmlicher Konvektionsheizungen. Der Temperaturgradient innerhalb der Bauwerkswand ist daher ebenfalls verringert, wodurch die Verluste durch Wärmeabgabe an die Umwelt kleiner gehalten werden. Auch damit wird eine Verringerung der Heizkosten erzielt.

Bei einer vorteilhaften Ausführungsform des Raumtemperierungssystems ist der Wärmetauscher geringfügig oberhalb des unteren Umkehrraums im raumseitigen Strömungskanal angeordnet, wobei er sich horizontal über die gesamte Breite der als Heizung fungierenden Vorsatzschale erstreckt. Besonders gute Ergebnisse lassen sich beim Einsatz von Wärmetauschern erzielen, die eine Vielzahl von metallischen Lamellen aufweisen, die in Strömungsrichtung angeordnet sind und von der bewegten Luft umströmt werden. Derartige Wärmetauscher weisen einen hohen Wirkungsgrad auf und ermöglichen es, mit Wärmetauschern geringer Abmessungen auch größere Luftmengen zu erwärmen, wie dies bei sehr hohen Vorsatzschalenwänden erforderlich ist.

Es ist besonders zweckmäßig, wenn die Trennwand aus einem Wärmedämmaterial besteht, wodurch Wärmeverluste aufgrund der Abgabe von Wärme an die Umwelt weiter verringert werden. Bei einer zu bevorzugenden Ausführungsform bestehen sowohl die Trennwand, als auch die Trennstege und die Abdeckplatte aus Pappe. Dieses Material weist sehr gute Wärmedämmeigenschaften auf, kann unter Verwendung von wiederverwertbaren Rohstoffen hergestellt werden und ist selbst ohne weiteres einem Recyclingprozeß zuführbar.

Eine vorzuziehende Ausführungsform des Raumtemperierungssystems zeichnet sich dadurch aus, daß vorkonfigurierte Bauelemente zum Einsatz kommen, die jeweils aus der Trennwand, den Trennstegen und der Abdeckplatte bestehen, die fest miteinander verbunden sind. Insbesondere ist es zweckmäßig, wenn zumindest zwei Varianten der vorkonfigurierten Bauelemente zur Verfügung stehen, wobei ein erstes Bauelement an seinem oberen Ende den durch die Trennstege und die Abdeckplatte gebildeten oberen Umkehrraum umfaßt, ein zweites Bauelement an seinem unteren Ende den entsprechend gebildeten unteren Umkehrraum umfaßt und diese beiden Bauelemente an ihrem jeweils anderen Ende komplementär zueinander ausgebildet sind, so daß Sie nach der Montage unter Fortsetzung der Teilkanäle unmittelbar aneinander angrenzen. Es kann auch ein drittes Bauelement eingesetzt werden, welches aus der Trennplatte und daran befestigten raumseitigen Trennstegen besteht und zwischen dem ersten und dem zweiten Bauelement als Verbindungselement eingesetzt ist. Sofern diese Bauelemente aus Pappe bestehen, können Sie mit einfachen Werkzeugen ohne Schwierigkeiten an die erforderlichen baulichen Gegebenheiten angepaßt werden, so daß standardisierte Bauelemente verwendet werden können. Die Herstellungs- und Montagekosten für ein solches Raumtemperierungssystem lassen sich auf diese Weise deutlich senken.

Es ist besonders zweckmäßig, wenn das Raumtemperierungssystem in eine Vorsatzschalenwand integriert ist, wobei die Trennwände der genannten zwei bzw. drei Bauelemente jeweils zwischen zwei Pfosten der Vorsatzschalenwand über die gesamten Höhe angeordnet sind. Zur weiteren Vereinfachung der Montage des Raumtemperierungssystems sind die Pfosten dieser Vorsatzschalenwand so ausgelegt, daß sie ein leistenförmiges an der Bauwerkswand anliegendes Auflageteil besitzen, dessen Stärke den Anstand zwischen Trennwand und Bauwerkswand bestimmt, daß im wesentlichen über die gesamte Länge des Auflageteils ein quaderförmiges Montageteil symmetrisch angebracht ist, dessen Breite geringer als die des Auflageteils ist und dessen Stärke den Anstand zwischen Trennwand und Vorsatzschale bestimmt, so daß die Trennplatte auf der verbleibenden Fläche des Auflageteils zu liegen kommt und seitlich vom Montageteil geführt wird, und daß die Vorsatzschale an der Stirnfläche des Montageteils befestigbar ist, wobei das Montageteil im Bereich des Wärmetauschers ausgespart ist. Das Raumtemperierungssystem kann auf diese Weise in herkömmliche Vorsatzschalenwände integriert werden, wobei es vorteilhaft ist, wenn die Abmaße den standardisierten Abmessungen entsprechen. Die besondere Ausgestaltung der Pfosten gewährleistet eine exakte Ausrichtung der Bauelemente untereinander, so daß die einzelnen Teilkanäle ohne Unterbrechungen oder Hindernisse im Strömungsverlauf ausgebildet werden, jedoch ohne aufwendige Montage- und Positionierungsarbeiten.

Bei Ausgestaltung der Bauelemente für den Einsatz in standardisierten Vorsatzschalenwänden kann die Vorsatzschale aus Leichtbauplatten, insbesondere Gipskartonplatten, aufgebaut werden oder auch aus Natur- oder Kunststeinplatten bestehen. Die Oberfläche der Vorsatzschale wird den erforderlichen Umgebungsbedingungen angepaßt.

Das erfindungsgemäße Raumtemperierungssystem kann nicht nur als Heizung eingesetzt werden, sondern bei geeigneter Versorgung des Wärmetauschers mit einem gekühlten Medium auch der Klimatisierung, d.h. einer Kühlung des Raums dienen. Sofern auf die kühlende Funktion des Raumtemperierungssystems vorrangiger Wert gelegt wird, kann der Wärmetauscher auch unmittelbar unterhalb des oberen Umkehrraums angeordnet sein. Für eine hohe Flexibilität des Raumtemperierungssystems ist es auch möglich, mehrere Wärmetauscher im Strömungskanal anzuordnen.

Weitere Vorteile, Weiterbildungen und Einzelheiten des erfindungsgemäßen Raumtemperierungssystems ergeben sich aus der Beschreibung bevorzugter Ausführungsformen unter Bezugnahme auf die Zeichnung. Es zeigen:
- Fig. 1: eine vereinfachte perspektivische Ansicht eines Abschnitts eines Raumtemperierungssystems, welches in eine Vorsatzschalenwand eingebaut ist;
- Fig. 2: eine Vorderansicht eines ersten Bauelements des Raumtemperierungssystems mit einem oberen Umkehrraum;
- Fig. 3: eine Seitenansicht des ersten Bauelements aus Fig. 2;
- Fig. 4: eine Vorderansicht eines zweiten Bauelements des Raumtemperierungssystems mit einem unteren Umkehrraum;
- Fig. 5: eine Seitenansicht des Bauelements aus Fig. 4;
- Fig. 6: eine Vorderansicht eines Pfostens für eine Vorsatzschalenwand mit dem Raumtemperierungssystem;
- Fig. 7: eine Seitenansicht des Pfostens aus Fig. 6;
- Fig. 8: eine Ansicht von unten auf den Pfosten aus Fig. 6.

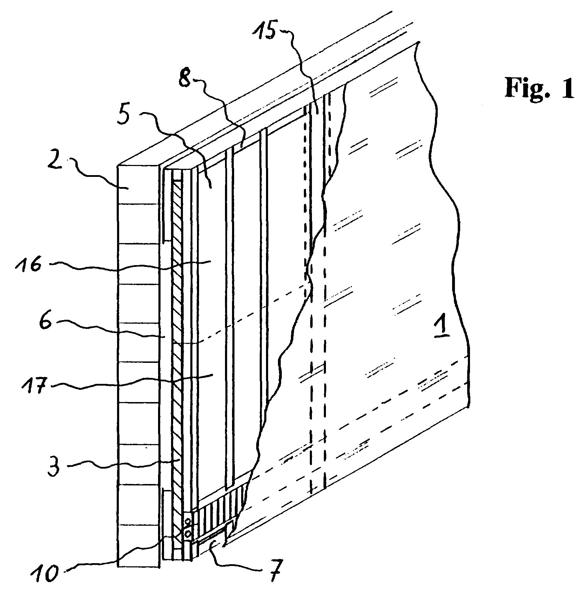

In Fig. 1 ist in einer vereinfachten perspektivischen Ansicht ein Abschnitt einer Wand gezeigt, wobei diese Wand teilweise aufgeschnitten ist, um den inneren Aufbau zu verdeutlichen. Das Raumtemperierungssystem umfaßt eine Vorsatzschale 1, die als Temperierungselement für den Raum dient. Die Vorsatzschale 1 ist vor einer Bauwerkswand 2 aufgebaut und in geeigneter Weise an dieser befestigt. Die Vorsatzschale 1 steht in einen definierten Abstand zur Bauwerkswand 2, beispielsweise ca. 10 cm, wodurch ein zum Raum hin dicht abgeschlossener Hohlraum entsteht. Das Raumtemperierungssystem umfaßt weiterhin eine im wesentlichen parallel zur Bauwerkswand verlaufende Trennwand 3, die den Hohlraum in einen raumseitigen Strömungskanal 5 und einen bauwerkswandseitigen Strömungskanal 6 unterteilt.

Die Trennwand 3 erstreckt sich im wesentlichen über die gesamte Höhe der Vorsatzschalenwand. Im unteren Bereich ist ein unterer Umkehrraum 7 und im oberen Bereich ein oberer Umkehrraum 8 angeordnet, die die einzigen Verbindungen zwischen dem raumseitigen und dem bauwerkswandseitigen Strömungskanal darstellen. Geringfügig oberhalb des unteren Umkehrraums 7 ist ein Wärmetauscher 10 vorgesehen, der sich horizontal entlang des gesamten zu beheizenden Abschnitts der Vorsatzschalenwand erstreckt. Besonders gute Ergebnisse lassen sich erzielen, wenn es sich bei dem Wärmetauscher 10 um einen Konvektor handelt, der auf metallischen Rohren eine Vielzahl von ebenfalls metallischen Lamellen besitzt, wobei die Rohre und die Lamellen durch eine dauerhafte, gut wärmeleitende, insbesondere metallische, Verbindung in Wärmekontakt stehen. Es sind aber auch andere Formen von Wärmetauschern denkbar, die dem Ziel dienen, die im Hohlraum befindliche Luft mit einem möglichst guten Wirkungsgrad zu erwärmen, in dem die durch ein Wärmetransportmedium in den Wärmetauscher beförderte Wärmeenergie an die umgebende Luft abgegeben wird.

Sofern das Raumtemperierungssystem auch oder ausschließlich der Kühlung des Raums dienen soll, muß ggf. ein anders aufgebauter Konvektor und eine veränderte Anordnung des Konvektors im Hohlraum gewählt werden.

Das dargestellte Raumtemperierungssystem weist darüber hinaus einen Pfosten 15 auf, der sowohl der Führung und Befestigung der Trennwand 3 als auch der Montage der eigentlichen Vorsatzschale 1 dient. Die Trennwand 3 liegt seitlich dicht am Pfosten 15 an, so daß auch an dieser Stelle eine exakte Trennung zwischen dem raumseitigen Strömungskanal 5 und dem bauwerkswandseitigen Strömungskanal 6 gewährleistet ist. Die Vorsatzschale 1 ist in herkömmlicher Weise an der Stirnseite des Pfostens 15 befestigt. Die Art und Weise dieser Befestigung ist vor allem von dem gewählten Material für die Vorsatzschale 1 abhängig, beispielsweise lassen sich Gipskartonplatten mit geeigneten Schrauben am Pfosten 15 anbringen.

Das Material der Vorsatzschale 1 wird nach dem gewünschten Einsatzzweck ausgewählt. Aus Kostengründen kommen häufig Leichtbauplatten oder Gipskartonplatten zum Einsatz. Als besonders zweckmäßig hat sich die Verwendung von Natur- oder Kunststeinmaterial, insbesondere von dünnen Marmorplatten erwiesen. Derartige Marmorplatten sind wasserbeständig, weisen eine sehr ansprechende und pflegeleichte Oberflächengestaltung auf und besitzen zudem besonders zu bevorzugende wärmetechnische Eigenschaften. Die Marmorplatten haben einen wesentlich geringeren Wärmewiderstand als beispielsweise Gipskartonplatten, so daß sich eine deutlich verkürzte Aufheizphase ergibt. Nicht zuletzt kann damit der Wirkungsgrad des Raumtemperierungssystems weiter verbessert werden.

Die Trennwand 3 kann mit den gewünschten Abmaßen einstückig ausgebildet sein. Es ist aber besonders zweckmäßig die Trennwand 3 und die an ihr befestigten weiteren Elemente, die weiter unten beschrieben werden, in Standardmaßen herzustellen und zumindest in ein erstes Bauelement 16, welches an seinem oberen Ende den oberen Umkehrraum 8 umfaßt, und ein zweites Bauelement 17, welches an seinem unteren Ende den unteren Umkehrraum 7 umfaßt, aufzuteilen und erst bei Montage des Raumtemperierungssystems in der gezeigten Weise zusammenzusetzen. Bei der Montage läßt sich die Länge eines oder beider Bauelemente in einfacher Weise anpassen, so daß immer die gewünschte Höhe in der Vorsatzschalenwand ausgefüllt ist.

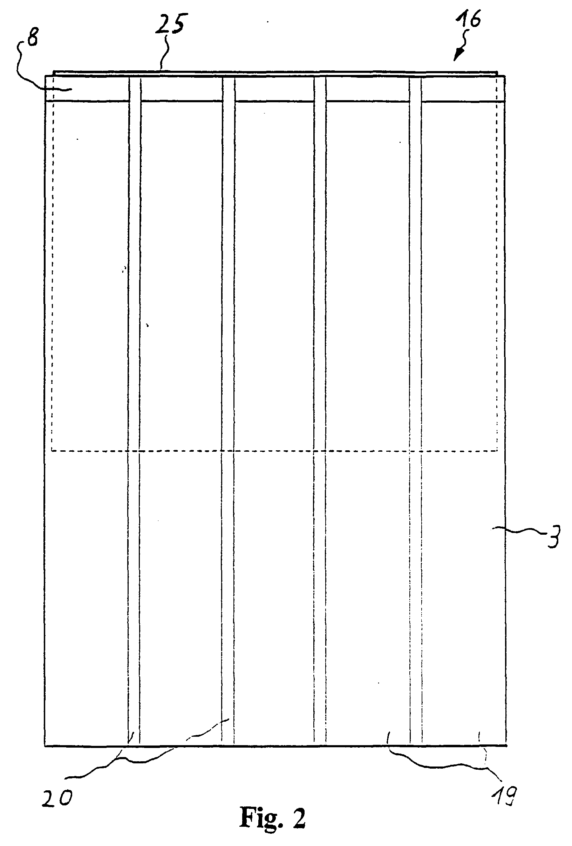

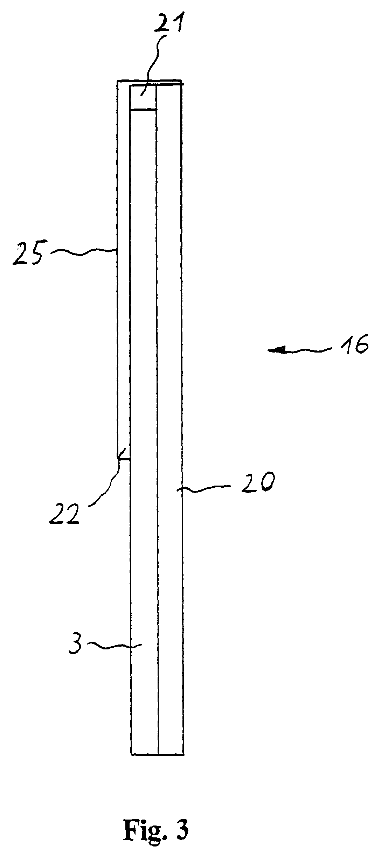

Fig. 2 zeigt eine Ansicht von vorn auf das erste Bauelement 16. In Fig. 3 ist dieses erste Bauelement 16 in einer Seitenansicht dargestellt. Die Trennwand 3 bildet den Hauptteil des ersten Bauelements 16. Auf der Vorderseite der Trennwand 3, also derjenigen Fläche, die im eingebauten Zustand zum raumseitigen Strömungskanal hin gerichtet ist, sind zur Ausbildung von mehreren Teilkanälen 19 über die gesamte Ausdehnung der Trennwand vertikal verlaufende raumseitige Trennstege 20 angebracht. Der Abstand zwischen den einzelnen Trennstegen 20 beträgt vorzugsweise etwa 10 cm, wobei das auszuwählende Abstandsmaß sowohl von der zu beheizenden Raumhöhe, als auch den sonstigen strömungstechnischen Eigenschaften des Raumtemperierungssystems abhängig ist. Die raumseitigen Trennstege 20 weisen eine Höhe auf, die an den gewählten Abstand zwischen der Trennwand 3 und der aufzubringenden Vorsatzschale 1 angepaßt ist, so daß die Stirnseiten der raumseitigen Trennstege 20 dicht an der Rückenfläche der Vorsatzschale anliegen, wodurch die ausgebildeten Teilkanäle 19 strömungstechnisch voneinander getrennt sind. Eine geeignete Höhe für die Trennstege 20 sind 3 bis 4 cm.
Am oberen Ende des ersten Bauelements 16 befindet sich der obere Umkehrraum 8, der eine Verbindung zwischen dem raumseitigen Strömungskanal 5 und dem bauwerkswandseitigen Strömungskanal 6 herstellt. Dazu verlaufen die raumseitigen Trennstege 20 über die Trennwand 3 geringfügig hinaus und münden unterbrechungsfrei in Trennstege 21, die im Bereich des oberen Umkehrraums 8 verlaufen. Die Trennstege 21 münden ihrerseits unterbrechungsfrei in bauwerkswandseitige Trennstege 22, die auf der Rückseite der Trennwand 3 befestigt sind. Die bauwerkswandseitigen Trennstege 22 erstrecken sich etwa 30 bis 50 cm vertikal auf der Rückseite der Trennwand 3 und verlaufen parallel zu den raumseitigen Trennstegen 20. Die bauwerkswandseitigen Trennstege 22 besitzen vorzugsweise eine Höhe von 1 bis 3 cm. Über die gesamte Breite der Trennwand 3 sind die bauwerkswandseitigen Trennstege 22 und auch die im Bereich des oberen Umkehrraums verlaufenden Trennstege 21 von einer Abdeckplatte 25 überdeckt, so daß die Teilkanäle 19 im oberen Umkehrraum und in dem durch die Abdeckplatte 25 begrenzten Bereich des bauwerkswandseitigen Strömungskanals 6 ebenfalls voneinander getrennt verlaufen. Durch diese Maßnahme ist sichergestellt, daß zwischen den einzelnen Teilkanälen im raumseitigen Strömungskanal, im Umkehrraum und in dem unmittelbar an diesen angrenzenden Bereich des bauwerkswandseitigen Strömungskanals keine ungewollten Luftströmungen entstehen.

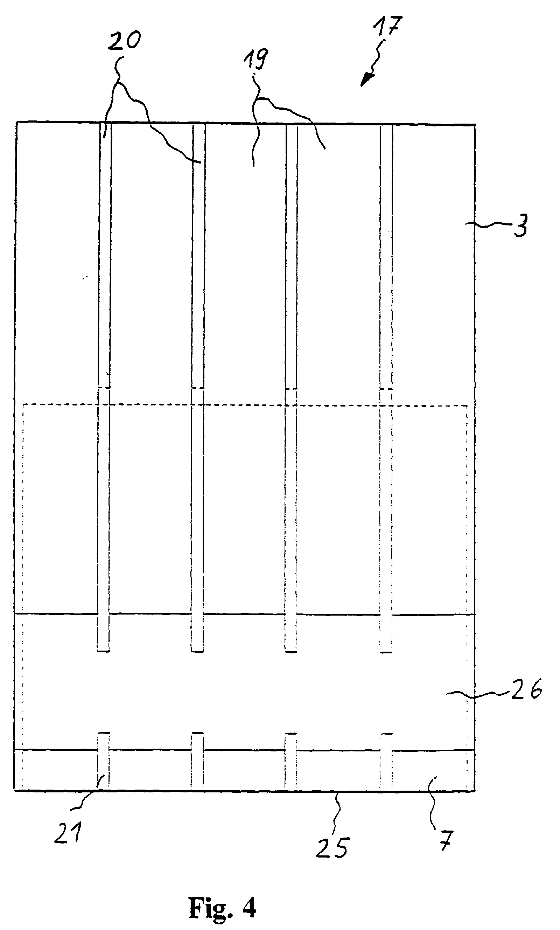

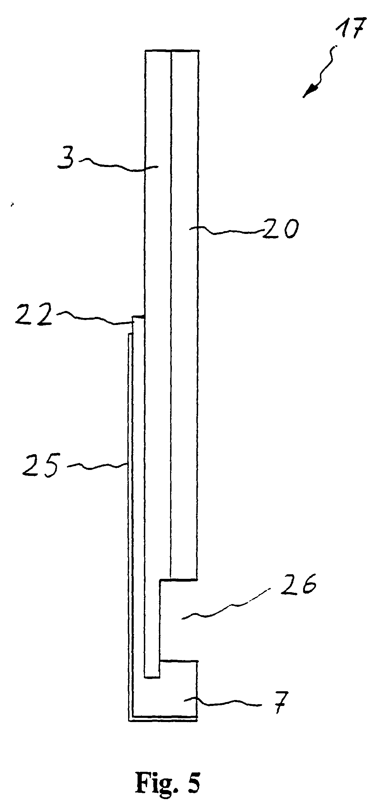

Fig. 4 zeigt eine Ansicht von vorn des zweiten Bauelements 17. In Fig. 5 ist eine Seitenansicht dieses zweiten Bauelements dargestellt. Auch das zweite Bauelement 17 besitzt als Hauptteil die Trennwand 3, an deren Vorderseite die raumseitigen Trennstege 20 angeordnet sind. Die raumseitigen Trennstege 20 erstrecken sich vertikal im wesentlichen über die gesamte Ausdehnung der Trennwand 3 . Am unteren Ende ist der untere Umkehrraum 7 ausgebildet, wiederum in der Weise, daß die raumseitigen Trennstege 20 geringfügig über die Trennwand 3 hinausragen und in Trennstege im Bereich des Umkehrraums münden, die ihrerseits in die auf der Rückseite der Trennwand 3 vertikal verlaufende bauwerkswandseitige Trennstege 22 ohne Unterbrechung übergehen. Die bauwerkswandseitigen Trennstege 22 verlaufen ebenfalls etwa auf einer Strecke von 30 bis 50 cm parallel zu den raumseitigen Trennstegen 20. Auch das zweite Bauelement 17 besitzt im Bereich des unteren Umkehrraums 7 und abschnittsweise auf der Rückseite der Trennwand 3 die Andeckplatte 25, die in der oben beschriebenen Weise angeordnet ist und die genannten Funktionen erfüllt.

Das zweite Bauelement 17 unterscheidet sich vom ersten Bauelement 16 insbesondere durch die Unterbrechung der raumseitigen Trennstege 20 geringfügig oberhalb des unteren Umkehrraums 7.

Damit entsteht eine sich horizontal erstreckende Aussparung 26, in welcher bei der Montage des Raumtemperierungssystems der Wärmetauscher 10 verlegt wird. In Fig. 5 ist erkennbar, daß die Aussparung 26 in ihren Abmaßen auch durch eine Verjüngung in der Trennwand 3 bestimmt ist. Die konkrete Abmessung der Aussparung 26 ergibt sich aus den Maßen des zu verwendenden Wärmetauschers, wobei gewährleistet sein muß, daß die Aussparung 26 im wesentlichen vollständig vom Wärmetauscher 10 ausgefüllt ist, damit keine Verbindung zwischen den einzelnen Teilkanälen 19 entsteht.

Zur Vervollständigung der Einzelteile des Raumtemperierungssystems kann ein in den Zeichnungen nicht dargestelltes drittes Bauelement verwendet werden, welches lediglich aus der Trennwand und daran befestigten raumseitigen Trennstegen besteht. Dieses dritte Bauelement dient als Verbindungsstück zwischen dem ersten und dem zweiten Bauelement und ist in seinen Abmaßen an diese angepaßt. Auf diese Weise lassen sich mit drei in ihren Abmaßen festgelegten Bauelementen nahezu sämtliche Anwendungsfälle für das Raumtemperierungssystem aufbauen, wobei lediglich eine längenmäßige Anpassung der einzelnen Bauelemente erforderlich ist, die einfach vor Ort erfolgen kann.

Wenn bei bestimmten Einsatzfällen des Raumtemperierungssystems der Wärmetauscher besser im oberen Bereich der Vorsatzschalenwand positioniert werden soll, so kann dies durch einfachen Austausch des ersten und zweiten Bauelements und angepaßter Montage der Pfosten ausgeführt werden.

Alle Bauelemente bestehen vorzugsweise aus einem Wärmedämmaterial. Insbesondere eignet sich Pappe zum Aufbau der vorkonfigurierten Bauelemente, da damit sowohl gute Wärmedämmeigenschaften erzielbar als auch eine einfache Anpassung der Abmessungen unmittelbar bei der Montage durchführbar ist. Die Trennwand 3 kann in diesem Fall aus mehreren Lagen von üblichen Pappplatten bestehen, währenddessen die Trennstege und die Abdeckplatte lediglich aus einer Lage der gleichartigen Pappe hergestellt sind. Die Verbindung zwischen den einzelnen Teilen kann zum Beispiel durch Kleben erfolgen. Die Bauelemente oder einzelne Abschnitte lassen sich aber auch aus anderen geeigneten Wärmedämmaterialien herstellen.

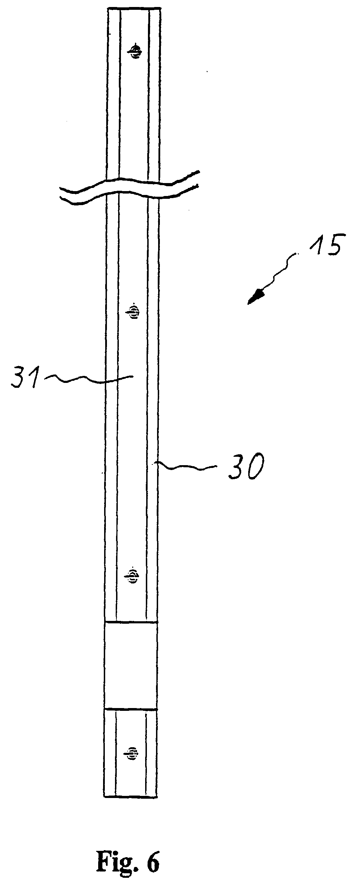

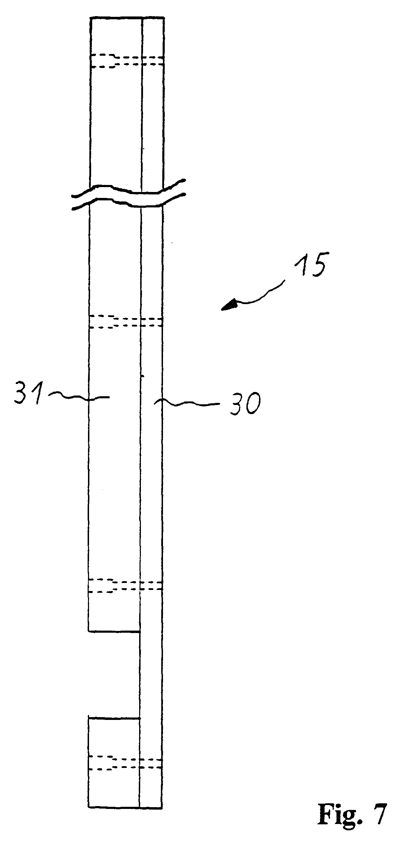

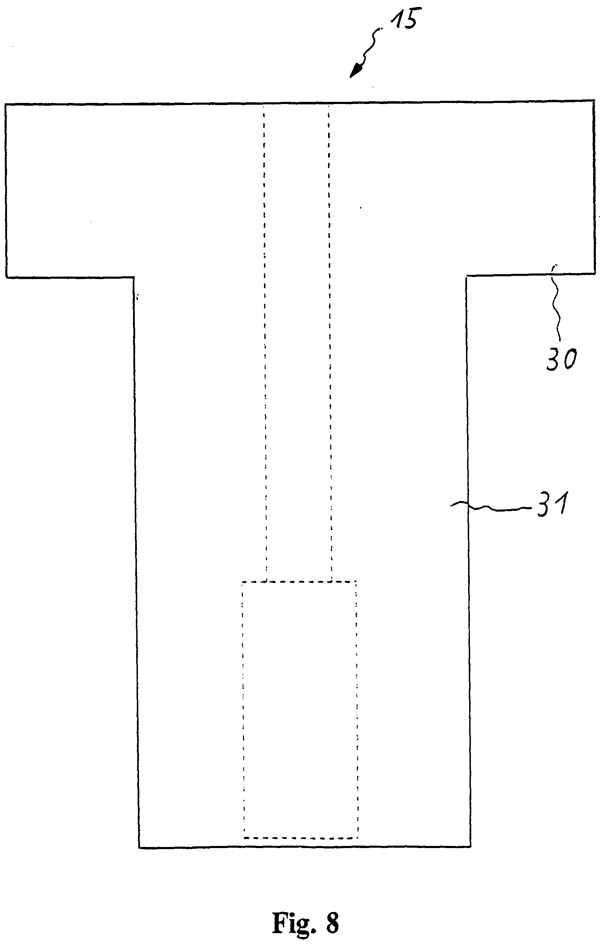

In Fig. 6 ist der Pfosten 15 in einer Ansicht von vorn gezeigt. Fig. 7 zeigt den Pfosten in der Seitenansicht und in Fig. 8 ist die Ansicht auf eine kurze Seitenfläche des Pfostens dargestellt. Der Pfosten 15 besteht im wesentlichen aus einem leistenförmigen Auflageteil 30, welches bei der Montage der Vorsatzschalenwand an der Bauwerkswand befestigt wird. Weiterhin besitzt der Pfosten 15 ein Montageteil 31, welches einen rechteckigen Querschnitt besitzt und sich im wesentlichen über die gesamte Länge des Auflageteils 30 erstreckt. Im unteren Bereich ist das Montageteil 31 unterbrochen oder ausgespart, so daß der Wärmetauscher an dieser Stelle durchgeführt werden kann. Das Auflageteil 30 besitzt eine Dicke, die den Abstand zwischen der Trennwand 3 und der Bauwerkswand 2 bestimmt. Die Trennwand 3 kommt auf der nicht vom Montageteil eingenommenen Fläche des Auflageteils zu liegen, so daß links und rechts des Montageteils 31 jeweils eine Trennplatte 3 auf das Auflageteil 30 aufgelegt werden kann. Damit bildet das Montageteil 31 den seitlichen Anschlag für die Trennplatte 3, d.h. für das erste, zweite und gegebenenfalls dritte Bauelement des Raumtemperierungssystems. Die Stirnfläche des Montageteils 31, die zum Raum hin gewandt ist, dient als Befestigungsfläche für die Vorsatzschale 1. Der Pfosten 15 kann monolithisch ausgebildet sein oder auch zusammengefügte Einzelteile in Form des Auflageteils und Montageteils besitzen.

Holz eignet sich besonders als Material für den Pfosten, da es gute Wärmedämmeigenschaften besitzt und eine einfache Bearbeitung und Längenanpassung möglich ist. In diesem Fall ist es zweckmäßig, wenn das Montageteil 31 ganzflächig auf dem Auflageteil 30 aufgeleimt und gegebenenfalls zusätzlich verschraubt ist, um Veränderungen durch Verziehen oder Verwinden vorzubeugen.

Als Pfosten können aber auch andere herkömmliche Bauelemente verwendet werden. Die Pfosten werden bei der Montage des Raumtemperierungssystems in den durch die Breite der ersten und zweiten Bauelemente 16, 17 vorgegebenen Abständen an der Bauwerkswand 2 montiert. Sofern aufgrund der räumlichen Gegebenheiten Abweichungen von diesem vorgegebenen Abstandsmaß erforderlich sind, können die ersten, zweiten und gegebenenfalls dritten Bauelemente in einfacher Weise an die erforderliche Breite angepaßt werden.

Das Raumtemperierungssystem wird vorzugsweise an Außenwänden des zu beheizenden Raumes eingesetzt. Natürlich können auch Innenwände oder zum Rauminneren gerichtete Dachschrägen mit dem Raumtemperierungssystem ausgerüstet werden. Die Abmessungen der einzelnen Bauelemente können an die jeweiligen Einsatzverhältnisse ohne weiteres angepaßt werden.

## Patentansprüche

1. Raumtemperierungssystem, bei dem Wände oder Wandbereiche des Raums als Temperierungselemente ausgebildet sind, die Wärmestrahlung emittieren oder absorbieren, wobei die Temperierungselemente als Vorsatzschale (1) vor der eigentlichen Bauwerkswand (2) aufgebaut und an dieser befestigt sind, unter Ausbildung eines zum Raum hin dichten Temperierungshohlraums zwischen Vorsatzschale und Bauwerkswand, der seinerseits durch eine im wesentlichen parallel zur Bauwerkswand verlaufende Trennwand (3) in einen raumseitigen Strömungskanal (5) und einen bauwerkswandseitigen Strömungskanal (6), die beide nur über obere und untere Umkehrräume (7, 8) miteinander strömungstechnisch verbunden sind, unterteilt ist und in welchem ein ein Wärmetransportmedium führender Wärmetauscher (10) angeordnet ist, wobei innerhalb des raumseitigen Strömungskanals (5) mehrere vertikal verlaufende raumseitige Trennstege (20) angeordnet sind, **dadurch gekennzeichnet**, **daß** sich die raumseitigen Trennstege zwischen Trennwand (3) und Vorsatzschale (1) vom unteren bis zum oberen Umkehrraum erstrecken, parallel zueinander in einem Abstand von 5 bis 20 cm verlaufen, nur vom Wärmetauscher (10) unterbrochen sind und strömungstechnisch voneinander getrennte Teilkanäle (19) ausbilden, daß die raumseitigen Trennstege (20) in im Bereich der Umkehrräume (7, 8) verlaufende Trennstege (21) übergehen, die ihrerseits in bauwerkswandseitige Trennstege (22) übergehen, welche innerhalb des bauwerkswandseitigen Strömungskanals (6) ausgehend vom oberen bzw. unteren Umkehrraum wenigstens ca. 30 cm vertikal weiter verlaufen, wodurch die Teilkanäle (19) auch in den Umkehrräumen (7, 8) und im bauwerkswandseitigen Strömungskanal (6) wenigstens in den unmittelbar an die Umkehrräume anschließenden Abschnitten strömungstechnisch voneinander getrennt sind, und daß die Trennstege (21, 22) im Bereich der Umkehrräume (7, 8) und des bauwerkswandseitigen Strömungskanals (6) zur Gewährleistung einer exakten strömungstechnischen Trennung der Teilkanäle von einer alle Teilkanäle übergreifenden Abdeckplatte (25) überdeckt sind.

2. Raumtemperierungssystem nach Anspruch 1, dadurch gekennzeichnet, daß der Wärmetauscher (10) geringfügig oberhalb des unteren Umkehrraums (7) horizontal im raumseitigen Strömungskanal (5) angeordnet ist.

3. Raumtemperierungssystem nach Anspruch 1 oder 2, dadurch gekennzeichnet, daß die Trennwand (3) aus einem Wärmedämmaterial besteht.

4. Raumtemperierungssystem nach einem der Ansprüche 1 bis 3, dadurch gekennzeichnet, daß die Trennwand (3), die Trennstege (20, 21, 22) und die Abdeckplatte (25) aus Pappe bestehen.

5. Raumtemperierungssystem nach einem der Ansprüche 1 bis 4, dadurch gekennzeichnet, daß der horizontale Abstand zwischen den Trennstegen (20, 21, 22) 10 bis 12 cm, der Spalt zwischen der Bauwerkswand (2) und der Trennwand (3) 1 bis 3 cm und der Spalt zwischen der Vorsatzschale (1) und der Trennwand (3) 2 bis 5 cm beträgt.

6. Raumtemperierungssystem nach einem der Ansprüche 1 bis 5, dadurch gekennzeichnet, daß vorkonfigurierte Bauelemente (16, 17) eingesetzt sind, die aus der Trennwand (3) , den Trennstegen (20, 21 22) und der Abdeckplatte (25) bestehen, die fest miteinander verbunden sind.

7. Raumtemperierungssystem nach einem der Ansprüche 1 bis 6, dadurch gekennzeichnet, daß es in eine Vorsatzschalenwand integriert ist.

8. Raumtemperierungssystem nach Anspruch 7, dadurch gekennzeichnet, daß die Trennwand (3) jeweils zwischen zwei Pfosten (15) über die gesamte Höhe der Vorsatzschalenwand angeordnet ist, wobei die Pfosten (15) ein leistenförmiges an der Bauwerkswand anliegendes Auflageteil (30) besitzen, dessen Stärke den Abstand zwischen Trennwand (3) und Bauwerkswand (2) bestimmt, daß im wesentlichen über die gesamte Länge des Auflageteils (30) ein quaderförmiges Montageteil (31) symmetrisch angebracht ist, dessen Breite geringer als die des Auflageteils ist und dessen Stärke den Abstand zwischen Trennwand (3) und Vorsatzschale (1) bestimmt, so daß die Trennwand auf der verbleibenden Fläche des Auflageteils (30) zu liegen kommt und seitlich vom Montageteil (31) geführt wird, und daß die Vorsatzschale (1) an der Stirnfläche des Montageteils (31) befestigbar ist, wobei das Montageteil im Bereich des Wärmetauschers (10) ausgespart ist.

9. Raumtemperierungssystem nach einem der Ansprüche 1 bis 8, dadurch gekennzeichnet, daß die Vorsatzschale (1) aus Leichtbauplatten, insbesondere Gipskartonplatten besteht.

10. Raumtemperierungssystem nach einem der Ansprüche 1 bis 8, dadurch gekennzeichnet, daß die Vorsatzschale (1) aus Natur- oder Kunststeinplatten besteht.

11. Raumtemperierungssystem nach einem der Ansprüche 1 bis 10, dadurch gekennzeichnet, daß es als Heizung dient, daß der Wärmetauscher (10) von erhitztem Wasser durchflossen wird, daß im raumseitigen Strömungskanal (5) die durch den Wärmetauscher erwärmte Luft geleitet wird, welche beim Aufsteigen die Vorsatzschale (1) erwärmt und dadurch selbst abkühlt, und daß im bauwerkswandseitigen Strömungskanal (6) die abgekühlte Luft nach unten geleitet wird.

12. Raumtemperierungssystem nach einem der Ansprüche 1 bis 10, dadurch gekennzeichnet, daß der Wärmetauscher (10) von einem gekühlten Medium durchflossen wird, so daß das Raumtemperierungssystem als Kühlanlage dient.
